# FASCICULE DE BREVET EUROPEEN

(11) **EP 1 579 718 B1**
(45) Date de publication et mention de la délivrance du brevet: **19.12.2018**
(21) Numéro de dépôt: 03814511.6
(22) Date de dépôt: 22.12.2003
(51) Int. Cl.: H04W 88/06

(54) **SYSTEME ET PROCEDE DE GESTION DE RESSOURCES DANS UN TERMINAL RELIE A UN RESEAU DE COMMUNICATION**
SYSTEM UND VERFAHREN ZUR VERWALTUNG VON RESSOURCEN IN EINEM GERÄT EINES KOMMUNIKATIONNETZES
SYSTEM AND METHOD FOR RESOURCE MANAGEMENT IN A TERMINAL CONNECTED TO A COMMUNICATION NETWORK

(30) Priorité: 26.12.2002 FR 0216751
(43) Date de publication de la demande: 28.09.2005
(73) Titulaire: Orange, 75015 Paris (FR)
(72) Inventeur: ANNIC, Etienne, F-78120 Rambouillet (FR)
(86) Numéro de dépôt international: PCT/FR2003/003947
(87) Numéro de publication internationale: WO 2004/062296

(56) Documents cités:
- EP-A- 1 251 706
- EP-B1- 1 258 151
- GB-A- 2 362 544

## Description

La présente invention concerne un système et un procédé de gestion de ressources dans un terminal relié à un réseau de communication.

L'invention s'applique plus particulièrement à la gestion des ressources allouées à un réseau de communication parmi un ensemble de réseaux de communication, offrant chacun un ensemble de services, par l'intermédiaire d'une architecture dédiée intégrée à un terminal, relié à un réseau mobile public auquel l'utilisateur est abonné.

Actuellement, ces services sont accessibles à partir d'un terminal raccordé aux réseaux de télécommunications mobiles, tel que le système GPRS (General Packet Radio Service, soit service général de radiocommunication en mode paquet) ou le système UMTS (Universal Mobile Telecommunications System, soit système universel de télécommunications avec les mobiles).

Dans ces dits réseaux mobiles, pour sélectionner un réseau de communication offrant des services, il faut sélectionner un nom identifiant ledit réseau de communication. Pour établir une connexion entre un terminal et un réseau de communication déterminé, ledit nom identifiant est transmis à travers un équipement de support de service du réseau mobile vers un équipement de gestion d'accès aux dits réseaux de communication. Ledit nom identifiant, en provenance du terminal, permet audit équipement de support de service du réseau mobile de déterminer l'équipement de gestion d'accès offrant l'accès au réseau de communication et associé audit nom identifiant.

Dans les réseaux actuels de type GPRS ainsi que UMTS, le nom identifiant un réseau de communication est appelé un APN (Access Point Name, soit nom de point d'accès). Un nom identifiant APN comprend principalement un identifiant correspondant au réseau de communication sélectionné, un identifiant de l'opérateur qui gère ledit réseau de communication et un identifiant de la technologie du réseau mobile, par exemple GPRS. Le format, ainsi que l'usage, d'un nom identifiant APN sont normalisés par l'ETSI (European Télécommunications Standards Institute, soit Institut européen de normalisation des télécommunications).

Pour accéder à un réseau de communication offrant un ensemble de services, l'utilisateur sélectionne un nom identifiant APN sur le terminal, de manière à établir la connexion avec le réseau de communication correspondant.

Une fois un nom identifiant APN sélectionné sur le terminal, un protocole d'accès démarre. En GPRS ou en UMTS, ce protocole est appelé "PDP" (Packet Data Protocol, soit protocole de données en mode paquet). Une procédure d'établissement de la connexion du terminal vers l'équipement de gestion d'accès dit GGSN est mise en oeuvre. Pour permettre l'établissement de la connexion, un lien est créé à travers le réseau mobile vers le réseau de communication sélectionné. En GPRS ou en UMTS, ce lien est appelé "PDP Context". Ce lien permet l'accès du terminal à l'ensemble des services dudit réseau de communication.

La norme de l'ETSI prévoit que plusieurs connexions peuvent être établies simultanément vers différents réseaux de communication à partir d'un même terminal. Le document FR 02 07457 décrit l'utilisation d'un gestionnaire d'architectures dédiées dans un terminal pour gérer l'accès simultané à plusieurs réseaux de communication.

Dans ledit document, à l'établissement de la connexion vers un réseau de communication, le gestionnaire d'architectures dédiées dialogue avec ledit réseau de communication. Dans le terminal, le gestionnaire d'architectures dédiées désigne une architecture dédiée qui est consacrée à la connexion audit réseau de communication. A l'établissement de chaque nouvelle connexion vers un nouveau réseau de communication, le gestionnaire d'architectures dédiées désigne une architecture différente, dédiée à la connexion audit nouveau réseau de communication. Dans un même terminal, les différentes architectures dédiées fonctionnent simultanément. Chaque architecture dédiée, associée chacune à un lien appelé "PDP Context", donne accès à un réseau de communication différent.

Ledit document mentionne que, dans un terminal, chaque architecture dédiée est affectée à un réseau de communication par ledit gestionnaire d'architectures dédiées. L'autonomie et le fonctionnement indépendant des architectures dédiées dudit terminal garantissent la confidentialité et la sécurité entre les réseaux de communication, en assurant une étanchéité entre les différents services connectés audit terminal. Un autre exemple se trouve dans le document EP1258151.

De manière à maintenir effectivement l'indépendance entre les différents réseaux de communication et du fait de l'autonomie entre les différentes architectures dédiées d'un terminal, chaque architecture dédiée n'a aucune vision du fonctionnement des autres architectures dédiées dudit terminal.

Aussi, le problème technique à résoudre par l'objet de la présente invention est de proposer un système et un procédé de gestion d'au moins une ressource dans un terminal pour au moins une architecture dédiée à un réseau de communication, qui permettrait de remédier aux inconvénients des systèmes existants en gérant les différentes architectures dédiées d'un même terminal.

La solution au problème technique posé consiste, selon la présente invention, en ce que ledit système comprend au moins un gestionnaire de ressources d'architecture dédiée apte à traiter au moins une demande de ressource de ladite architecture dédiée et apte à dialoguer avec au moins un administrateur de ressources d'au moins un gestionnaire d'architectures dédiées pour gérer au moins une ressource dudit terminal et pour traiter simultanément le fonctionnement desdites architectures dédiées dudit terminal connecté avec plusieurs desdits réseaux de communication.

Le gestionnaire d'architectures dédiées du terminal gère le fonctionnement simultané des différentes architectures dédiées aux différents réseaux de communication, auxquels ledit terminal est connecté.

De cette façon, chacune des architectures dédiées dudit terminal ne communique qu'avec un seul réseau de communication, associée au lien PDP Context correspondant, même lorsque ledit terminal est connecté avec plusieurs réseaux de communication.

Lorsque l'utilisateur du terminal souhaite accéder à un service, accessible par l'un desdits réseaux de communication connecté et associé à l'une desdites architectures dédiées, il active au moins une application sur le terminal. En fonction du service souhaité, ladite application peut prendre la forme d'un navigateur (ou browser) pour la lecture d'une page web, d'un lecteur de films, d'un lecteur de son analogique ou numérique, etc...

Dans le terminal, ladite application est associée à l'architecture dédiée audit réseau de communication concerné. Dans ladite architecture dédiée, un gestionnaire de ressources d'architecture dédiée traite une demande de ressources associée à l'exécution de ladite application.

De plus, ledit gestionnaire de ressources d'architecture dédiée transmet ladite demande de ressources audit gestionnaire d'architectures dédiées du terminal pour vérifier la faisabilité de ladite demande de ressources et la compatibilité avec les autres architectures dédiées et avec les ressources disponibles du terminal.

Le fonctionnement distinct et autonome des différentes architectures dédiées du terminal est donc préservé, ce qui garanti la confidentialité et la sécurité entre les différents réseaux de communication auxquels ledit terminal est connecté. Ces impératifs se font par exemple particulièrement sentir lors d'une transaction bancaire ou bien lors du raccordement à un réseau privé d'entreprise.

Selon l'invention, ledit gestionnaire de ressources d'architecture dédiée est équipé d'au moins une interface pour l'émission et la réception d'informations avec ledit administrateur de ressources dudit gestionnaire d'architectures dédiées.

Selon l'invention, ledit gestionnaire de ressources d'architecture dédiée est équipé d'au moins une interface pour l'émission et la réception d'informations avec au moins un gestionnaire de processus de ladite architecture dédiée.

Selon l'invention, ledit administrateur de ressources dudit gestionnaire d'architectures dédiées est équipé d'au moins une interface pour l'émission et la réception d'informations avec au moins un allocataire de ressources dudit terminal.

Selon l'invention, ledit administrateur de ressources dudit gestionnaire d'architectures dédiées est équipé d'au moins une interface pour l'émission et la réception d'informations avec au moins une interface radio.

Dans le terminal, ladite demande de ressources en provenance dudit gestionnaire de ressources d'architecture dédiée est traitée par différents équipements dudit terminal, tel qu'un gestionnaire de processus de ladite architecture dédiée, un administrateur de ressources dudit gestionnaire d'architectures dédiées, un allocataire de ressources et une interface radio dudit terminal.

Pour faciliter la transmission pour l'émission et la réception des informations de ressources, au moins une interface est intégrée dans lesdits équipements concernés du terminal, de manière à permettre les échanges nécessaires.

Par l'intermédiaire desdites interfaces intégrées, chacun desdits équipements du terminal dialogue avec au moins un autre équipement du terminal. Par contre, chacun desdits équipements n'a pas la même manière d'exprimer une demande de ressources, par exemple sous la forme d'un espace mémoire ou sous la forme de la taille dudit espace mémoire. Pour faciliter ledit dialogue, lesdits différents équipements concernés du terminal possèdent au moins un moyen de traduire le contenu de ladite demande de ressources reçue.

Conformément à l'invention, ledit gestionnaire de ressources d'architecture dédiée est équipé d'au moins une table de correspondance de ressources pour définir au moins une ressource correspondant à au moins une application activée sur ledit terminal.

Comme indiqué précédemment, l'application activée par l'utilisateur est associée à l'architecture dédiée audit réseau de communication concerné. Une demande d'exécution de ladite application est transmise vers un gestionnaire de processus de ladite architecture dédiée, qui l'identifie, puis la transmet vers le gestionnaire de ressources d'architecture dédiée.

Ledit gestionnaire de ressources d'architecture dédiée accède à au moins une table de correspondance de ressources permettant de définir au moins une ressource correspondant à ladite application. Par exemple, un espace mémoire est nécessaire pour télécharger un fichier en provenance d'un réseau de communication connecté au terminal. De cette façon, une demande de ressources correspond à ladite application activée.

L'invention a également pour objet un procédé de gestion d'au moins une ressource dans un terminal pour au moins une architecture dédiée à un réseau de communication, caractérisé en ce que ledit procédé comporte les opérations consistant à : - activer au moins une application sur ledit terminal ; - définir par au moins un gestionnaire de processus de ladite architecture dédiée au moins une ressource correspondant à ladite application ; - demander ladite ressource par ledit gestionnaire de processus à au moins un gestionnaire de ressources d'architecture dédiée ; - répondre après contrôle à ladite demande de ressources par ledit gestionnaire de ressources d'architecture dédiée ; - répondre après contrôle à ladite demande de ressources par au moins un administrateur de ressources d'au moins un gestionnaire d'architectures dédiées ; - allouer au moins une ressource par au moins un allocataire de ressources dudit terminal ; - allouer au moins une ressource par au moins une interface radio pour accéder audit réseau de communication ; - associer ladite ressource avec ladite application après validation par ledit gestionnaire de ressources d'architecture dédiée ; - exécuter ladite application par l'intermédiaire de ladite ressource par ledit gestionnaire de processus.

Chacun desdits équipements concernés du terminal reçoivent ladite demande de ressources correspondant à ladite application activée. Chacun desdits équipements du terminal contrôle la faisabilité et la compatibilité de ladite demande de ressources.

Ledit gestionnaire de processus gère l'ensemble des applications exécutées dans une architecture dédiée. Ledit gestionnaire de ressources d'architecture dédiée gère l'ensemble des demandes de ressources d'une architecture dédiée. Ledit administrateur de ressources du gestionnaire d'architectures dédiées gère l'ensemble des demandes de ressources demandées par lesdites architectures dédiées. Ledit allocataire de ressources du terminal gère les ressources disponibles dudit terminal et ladite interface radio gère les échanges avec le réseau mobile et ledit réseau de communication. Après validation des différents équipements, ladite application est exécutée grâce à ladite ressource attribuée.

En fonction de la nature de ladite application, ainsi que de la complexité technologique dudit terminal, ou dans un souci de simplification ou d'économie par exemple du temps de traitement sur le terminal, une partie des étapes dudit procédé, conforme à l'invention, peut ne pas être réalisée.

Mais plus le nombre d'étapes est réduit et plus la probabilité d'une incompatibilité sera importante entre une demande de ressources et le traitement réalisé par le terminal pour affecter ladite ressource.

Ledit gestionnaire d'architectures dédiées attribue une architecture dédiée à chacun desdits réseaux de communication, ce qui offre la possibilité de réaliser des gestions différentes et indépendantes, dans le même temps. Ledit administrateur de ressources dudit gestionnaire d'architectures dédiées centralise l'ensemble des demandes de ressources demandées par les différentes architectures dédiées.

Du fait du fonctionnement distinct et autonome des différentes architectures dédiées, le fonctionnement dudit terminal peut être adapté selon le réseau de communication avec lequel il est connecté. Par exemple, des fonctionnalités peuvent être prises en compte avec l'un des réseaux de communication et ne pas exister avec un autre réseau de communication.

De plus, du fait de l'augmentation du nombre de services accessibles par des réseaux de communication, l'autonomie de chaque architecture dédiée permet notamment d'affecter des ressources spécifiques, par exemple des applications spécifiques ou bien un espace mémoire différent ou bien des qualités de service différentes d'un réseau de communication à l'autre.

La description qui va suivre en regard des dessins annexés, donnés à titre d'exemple non limitatif, fera bien comprendre en quoi consiste l'invention et comment elle peut être réalisée.
La figure 1 est un schéma de l'architecture générale du système de gestion d'au moins une ressource dans un terminal pour au moins une architecture dédiée à un réseau de communication, conforme à l'invention.
La figure 2 est une représentation des étapes du procédé de gestion d'au moins une ressource dans un terminal, conforme à l'invention.

Pour simplifier la description, l'équipement raccordé au réseau de télécommunications mobiles est indiqué comme un terminal 10, mais il peut être de différentes natures, par exemple un serveur ou un terminal de communication mobile ou un ordinateur personnel de type PC (Personnal Computer).

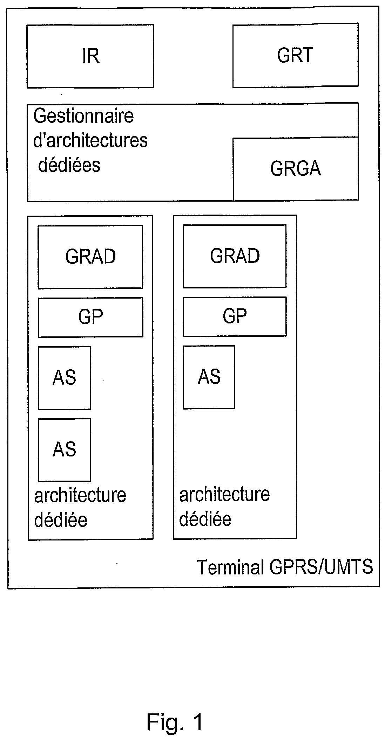

Sur la figure 1, qui représente dans son ensemble un système de gestion d'au moins une ressource dans un terminal 10 pour au moins une architecture dédiée 15, 15' à un réseau de communication, ledit terminal 10 est symbolisé par un équipement d'abonné 10 appelé UE (User Equipment).

Quel que soit le terminal 10 utilisé, celui-ci est relié à un réseau mobile public auquel l'utilisateur est abonné.

Actuellement, lorsque l'utilisateur du terminal 10 souhaite accéder à un réseau de communication, il transmet, par l'intermédiaire d'une borne radio du réseau mobile, un nom APN identifiant ledit réseau de communication, offrant un ensemble de services auxquels ledit terminal 10 souhaite accéder.

Pour se faire, ledit utilisateur accède, par exemple, par une interface utilisateur dans au moins un gestionnaire 13 d'architectures dédiées à au moins une liste de noms APN identifiant lesdits réseaux de communication, auxquels ledit utilisateur est abonné et auxquels il peut accéder. La norme de l'ETSI prévoyant que plusieurs connexions peuvent être établies simultanément vers différents réseaux de communication à partir d'un même terminal, entre autre chose, ladite liste des noms APN permet la gestion de plusieurs APN au sein dudit terminal.

Dans ledit réseau mobile, un équipement appelé "GGSN" établit la connexion vers ledit réseau de communication sélectionné. Un lien appelé "PDP Context" est établi à travers le réseau mobile vers ledit réseau de communication. Ce lien "PDP Context" permet l'accès du terminal 10 audit réseau de communication. Ledit équipement appelé "GGSN" transmet ensuite une adresse vers le terminal 10, qui identifie ledit terminal 10 pour ledit réseau de communication connecté.

Dans ledit terminal 10, le gestionnaire 13 d'architectures dédiées reçoit ladite adresse. Ledit gestionnaire 13 d'architectures dédiées affecte une architecture dédiée 15, 15' audit réseau de communication connecté. Ladite architecture dédiée 15, 15' est associée audit lien appelé "PDP Context", qui permet l'accès dudit terminal 10 audit réseau de communication.

Les étapes de la connexion, ci-dessus mentionnées, se renouvellent à chaque fois que l'utilisateur dudit terminal 10 souhaite accéder à au moins un nouveau réseau de communication. Dans le terminal 10, ledit gestionnaire 13 d'architectures dédiées affecte une nouvelle architecture dédiée 15, 15' à chaque nouveau réseau de communication connecté.

Lorsque l'utilisateur du terminal 10 souhaite accéder à un service accessible par l'un desdits réseaux de communication, il active au moins une application sur ledit terminal 10. En fonction du service souhaité, ladite application 18, 19, 20 peut prendre la forme d'un navigateur (ou browser) pour la lecture d'un page web, d'un lecteur de films, d'un lecteur de son analogique ou numérique, etc...

Dans ledit terminal 10, ladite application 18, 19, 20 est associée à l'architecture dédiée 15, 15' audit réseau de communication concerné. Une demande d'exécution de ladite application 18, 19, 20 est transmise vers au moins un gestionnaire 17, 17' de processus de ladite architecture dédiée 15, 15', qui attribue un identifiant à ladite demande d'exécution de l'application 18, 19, 20.

Ledit gestionnaire 17, 17' de processus gère l'ensemble des applications exécutées dans ladite architecture dédiée 15, 15'. Ledit gestionnaire 17, 17' de processus attribue un identifiant à chaque demande de ressources, identifiant qui est réellement effectif lorsque ladite demande de ressources est validée.

Ledit gestionnaire 17, 17' de processus transmet au moins une demande de ressources, correspondant à ladite application 18, 19, 20, vers au moins un gestionnaire 16, 16' de ressources d'architecture dédiée.

Dans ladite architecture dédiée 15, 15', ledit gestionnaire 16, 16' de ressources d'architecture dédiée gère les applications 18, 19, 20, associées à ladite architecture dédiée 15, 15' et activées par l'utilisateur dudit terminal 10, et les demandes de ressources nécessaires aux applications existantes.

Ledit gestionnaire 16, 16' de ressources d'architecture dédiée accède à au moins une table de correspondance de ressources permettant de définir au moins une ressource correspondant à ladite application 18, 19, 20 et nécessaire dans ledit terminal 10 pour exécuter ladite application. Par exemple, un moyen d'affichage, un espace mémoire, une interface entrée-sortie, ainsi qu'un temps de fonctionnement de l'unité centrale ou CPU (Central Processing Unit) du terminal 10 sont en particulier nécessaires pour ouvrir une page web.

Ledit gestionnaire 16, 16' de ressources d'architecture dédiée contrôle la faisabilité de ladite demande de ressources. Dans le cas de non-faisabilité, ledit gestionnaire 16, 16' de ressources d'architecture dédiée rejette ladite demande de ressources.

Pour faciliter la transmission des informations entre ledit gestionnaire 17, 17' de processus et ledit gestionnaire 16, 16' de ressources d'architecture dédiée, au moins une interface de transmission pour l'émission et la réception des informations est intégrée dans les deux gestionnaires 16, 16', 17, 17'.

De la même façon, une interface de transmission pour l'émission et la réception des informations de ressources est intégrée dans les différents équipements concernés dudit terminal 10, de manière à permettre les échanges nécessaires.

De plus, chacun desdits équipements dudit terminal 10 n'exprime pas ladite demande de ressources de la même manière qu'un autre équipement dudit terminal 10. Par exemple, ladite application 18, 19, 20 peut simplement demander un espace mémoire et ledit gestionnaire 16, 16' de ressources d'architecture dédiée peut ne comprendre que l'expression de l'espace mémoire sous la forme de la taille dudit espace mémoire nécessaire, telle que 150 kilos octets d'espace mémoire.

Par conséquent, chacun desdits équipements concernés du terminal 10, qui dialogue par l'intermédiaire desdites interfaces intégrées, possède au moins un moyen de traduire le contenu de ladite demande de ressources reçue.

Ledit gestionnaire 16, 16' de ressources d'architecture dédiée transmet ladite demande de ressources vers au moins un administrateur 14 de ressources, intégré dans au moins un gestionnaire 13 d'architectures dédiées.

La gestion, par le gestionnaire 13 d'architectures dédiées, des différentes architectures dédiées 15, 15', associées chacune à un réseau de communication différent, permet le fonctionnement dudit terminal 10 comme un terminal dit "multi-APN".

Dans ledit gestionnaire 13 d'architectures dédiées, ledit administrateur 14 de ressources contrôle à son tour la faisabilité de ladite demande de ressources correspondant à ladite architecture dédiée 15, 15' pour ladite application 18, 19, 20. Dans le cas de non-faisabilité, ledit administrateur 14 de ressources rejette ladite demande de ressources.

De plus, ledit administrateur 14 de ressources dudit gestionnaire 13 d'architectures dédiées, qui mémorise la liste et gère lesdites architectures dédiées 15, 15' utilisées dans ledit terminal 10, équilibre les demandes de ressources en provenance des différentes architectures dédiées 15, 15' et régule les ressources allouées entre les différentes architectures dédiées 15, 15'. Selon le paramétrage du terminal 10, ledit administrateur 14 de ressources dudit gestionnaire 13 d'architectures dédiées peut donner la priorité à certaines applications 18, 19, 20 par rapport aux autres ou bien à certaines architectures dédiées 15, 15'.

Ledit administrateur 14 de ressources dudit gestionnaire 13 d'architectures dédiées, en étant centralisé, évite les sollicitations vers le réseau mobile et vers le réseau de communication concerné, en particulier lorsque la demande de ressources est incompatible avec les capacités du terminal 10 ou avec les caractéristiques du nom identifiant APN correspondant audit réseau de communication.

Ledit administrateur 14 de ressources dudit gestionnaire 13 d'architectures dédiées centralise et maintient à jour les demandes de ressources en provenance des différentes architectures dédiées 15, 15', pour faciliter la gestion des ressources, en particulier lors de la fermeture d'une application 18, 19, 20 ou bien lors de celle d'une architecture dédiée 15, 15'.

Ledit administrateur 14 de ressources dudit gestionnaire 13 d'architectures dédiées transmet ladite demande de ressources vers au moins un allocataire 12 de ressources, intégré dans ledit terminal 10 pour réserver au moins une ressource correspondant à ladite demande de ressources.

Ledit allocataire 12 de ressources gère les différentes ressources existantes sur ledit terminal 10, telle qu'au moins un espace mémoire, au moins une interface entrée-sortie, un moyen d'affichage, ainsi que les temps de fonctionnement de l'unité centrale ou CPU (Central Processing Unit) dudit terminal 10.

Ledit administrateur 14 de ressources dudit gestionnaire 13 d'architectures dédiées transmet ladite demande de ressources vers au moins une interface radio 11 pour permettre l'accès par le réseau mobile audit réseau de communication concerné par ladite demande de ressources.

Dans le terminal 10, ladite interface radio 11 gère les différents échanges et les communications avec le réseau mobile et avec lesdits réseaux de communications, avec lesquels le terminal 10 est connecté.

En fonction du résultat des vérifications, ledit administrateur 14 de ressources dudit gestionnaire 13 d'architectures dédiées confirme la réservation de ressources vers ledit allocataire 12 de ressources et vers ladite interface radio 11 confirme l'exécution d'une procédure d'accès audit réseau de communication.

Lorsque les vérifications sont négatives, ledit administrateur 14 de ressources dudit gestionnaire 13 d'architectures dédiées annule ladite réservation de ressources vers ledit allocataire 12 de ressources et vers ladite interface radio 11 annulant l'exécution de ladite procédure d'accès audit réseau de communication.

Lorsque les vérifications sont positives, ledit administrateur 14 de ressources dudit gestionnaire 13 d'architectures dédiées transmet ladite demande de ressources vers ledit gestionnaire 16, 16' de ressources d'architecture dédiée, qui acquitte la réception du résultat de la demande de ressources.

Dans l'architecture dédiée 15, 15' concernée, ledit gestionnaire 16, 16' de ressources d'architecture dédiée associe les ressources allouées à ladite application 18, 19, 20 pour laquelle la demande de ressources identifiée a été réalisée.

Lorsque la demande de ressources a été rejetée, ledit gestionnaire 16, 16' de ressources d'architecture dédiée efface toutes les références se rapportant à ladite demande de ressources.

Dans ladite architecture dédiée 15, 15', ledit gestionnaire 16, 16' de ressources d'architecture dédiée transmet le résultat de la demande de ressources audit gestionnaire 17, 17' de processus.

Lorsque ladite demande de ressources a été acceptée, ledit gestionnaire 17, 17' de processus exécute ladite application 18, 19, 20. Dans le cas contraire, l'exécution de ladite application 18, 19, 20 est annulée.

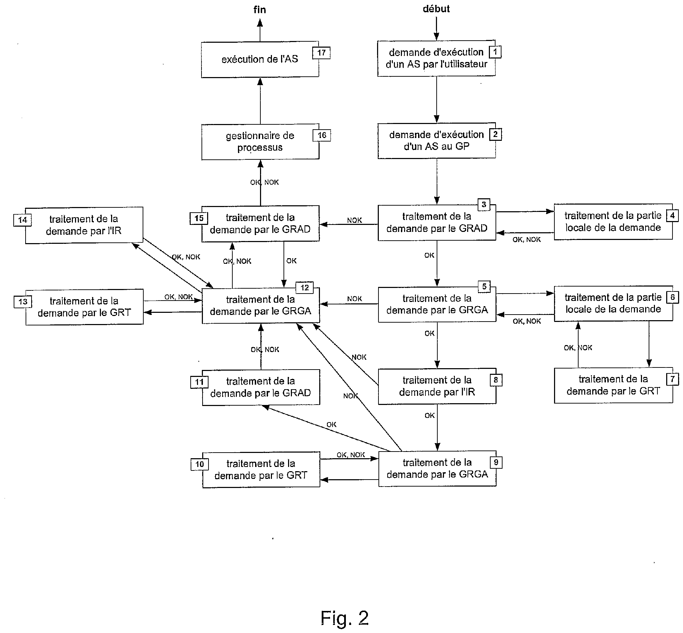

Pour aider à comprendre l'invention, les différentes étapes du procédé de gestion d'au moins une ressource dans un terminal 10, pour au moins une architecture dédiée 15, 15' à un réseau de communication, sont présentées en figure 2.

Lorsque l'utilisateur souhaite accéder à un service accessible par un des réseaux de communication, il active au moins une application 18, 19, 20 sur ledit terminal 10 (étape 1).

Une demande d'exécution de ladite application 18, 19, 20 est transmise vers ledit gestionnaire 17, 17' de processus de ladite architecture dédiée 15, 15' audit réseau de communication concerné (étape 2).

Ledit gestionnaire 17, 17' de processus défini au moins une ressource nécessaire dans ledit terminal 10 pour exécuter ladite application 18, 19, 20.

Ledit gestionnaire 17, 17' de processus transmet au moins une demande de ressources, correspondant à ladite application 18, 19, 20, vers au moins un gestionnaire 16, 16' de ressources d'architecture dédiée (étape 3).

Dans ladite architecture dédiée 15, 15', ledit gestionnaire 16, 16' de ressources d'architecture dédiée traite une partie de ladite demande, qui est gérée localement par ledit gestionnaire 16, 16' de ressources d'architecture dédiée. Ledit gestionnaire 16, 16' de ressources d'architecture dédiée analyse ladite partie locale de la demande pour contrôler la faisabilité de ladite demande de ressources (étape 4).

A ce niveau du traitement, ledit gestionnaire 16, 16' de ressources d'architecture dédiée peut soit acquitter la partie localement traitée de ladite demande de ressources par un message d'acquittement (OK), soit rejeter ladite partie par un message de rejet (NOK), soit modifier ladite demande de ressources en fonction, par exemple, des ressources déjà attribuées à ladite architecture dédiée 15, 15'.

Un message de rejet (NOK) peut être transmis, par exemple, lorsque ledit gestionnaire 16, 16' de ressources d'architecture dédiée ne comprend pas la demande de ressources ou lorsque apparaît un problème de traitement de ladite demande de ressources par ledit gestionnaire 16, 16' de ressources d'architecture dédiée.

Comme mentionné précédemment, au moins une interface de transmission pour l'émission et la réception des informations est intégrée dans ledit gestionnaire 17, 17' de processus et ledit gestionnaire 16, 16' de ressources d'architecture dédiée. De même, si nécessaire, par l'intermédiaire desdites interfaces intégrées, le dialogue est facilité par au moins un moyen de traduire le contenu de ladite demande de ressources.

Lorsque l'analyse est négative (message NOK), ladite demande de ressources est rejetée et l'étape suivante du procédé, conforme à l'invention, est l'étape 15 (voir ci-après).

Lorsque l'analyse est positive (message OK), ledit gestionnaire 16, 16' de ressources d'architecture dédiée transmet ladite demande de ressources vers ledit administrateur 14 de ressources dudit gestionnaire 13 d'architectures dédiées (étape 5).

Dans le terminal 10, ledit administrateur 14 de ressources dudit gestionnaire 13 d'architectures dédiées traite une partie de ladite demande, qui est gérée localement par ledit administrateur 14 de ressources. Ledit administrateur 14 de ressources dudit gestionnaire 13 d'architectures dédiées analyse ladite partie locale de la demande pour contrôler la faisabilité de ladite demande de ressources (étape 6).

A ce niveau du traitement, ledit administrateur 14 de ressources dudit gestionnaire 13 d'architectures dédiées peut soit acquitter la partie localement traitée de ladite demande de ressources par un message d'acquittement (OK), soit rejeter ladite partie par un message de rejet (NOK), soit modifier ladite demande de ressources en fonction, par exemple, des ressources déjà utilisées dans ledit terminal 10.

Lorsque l'analyse est négative (message NOK), ladite demande de ressources est rejetée et l'étape suivante du procédé, conforme à l'invention, est l'étape 12 (voir ci-après).

Lorsque l'analyse est positive (message OK), ledit administrateur 14 de ressources dudit gestionnaire 13 d'architectures dédiées transmet ladite demande de ressources vers ledit allocataire 12 de ressources dudit terminal 10 (étape 7).

Comme précédemment, ledit allocataire 12 de ressources contrôle la faisabilité de la demande reçue et peut soit acquitter ladite demande de ressources par un message d'acquittement (OK), soit rejeter ladite demande par un message de rejet (NOK), soit modifier ladite demande de ressources en fonction, par exemple, des ressources déjà utilisées dans ledit terminal 10.

Lorsque l'analyse est négative, ladite demande de ressources est rejetée et ledit allocataire 12 de ressources transmet un message de rejet (NOK) vers ledit administrateur 14 de ressources dudit gestionnaire 13 d'architectures dédiées.

Lorsque l'analyse est positive, ledit allocataire 12 de ressources réalise une réservation d'au moins une ressource correspondant à ladite demande de ressources et transmet un message d'acquittement (OK) audit administrateur 14 de ressources.

Lorsque les analyses précédentes sont positives (messages OK), ledit administrateur 14 de ressources dudit gestionnaire 13 d'architectures dédiées transmet ladite demande de ressources vers ladite interface radio 11 dudit terminal 10 (étape 8).

Ladite interface radio 11 dudit terminal 10 extrait de ladite demande de ressources les paramètres nécessaires à l'exécution de la procédure d'accès au réseau mobile, ainsi qu'audit réseau de communication concerné. Ladite procédure d'accès à un réseau de communication, normalisée par l'ETSI, va également permettre la réservation de ressources pour ledit réseau de communication.

Ladite interface radio 11 dudit terminal 10 reçoit dudit réseau de communication le résultat de la procédure, soit un rejet (message NOK) ou soit une acceptation (message OK) ou soit une modification de ladite demande de ressources.

Ladite interface radio 11 dudit terminal 10 transmet ledit résultat vers ledit administrateur 14 de ressources dudit gestionnaire 13 d'architectures dédiées (étape 9).

Lorsque le message transmis est un message de rejet (message NOK), la demande de ressources est rejetée et l'étape suivante du procédé, conforme à l'invention, est l'étape 12 (voir ci-après).

Lorsque le message transmis est une modification de ladite demande de ressources, ledit administrateur 14 de ressources transmet ladite demande de ressources modifiée vers ledit allocataire 12 de ressources dudit terminal 10, pour réaliser une modification de la réservation des ressources (étape 10).

Le résultat est à nouveau soit un acquittement (message OK) soit un rejet (message NOK) vers ledit administrateur 14 de ressources dudit gestionnaire 13 d'architectures dédiées.

Lorsque le message transmis est un message d'acquittement (message OK), ledit administrateur 14 de ressources transmet ladite demande de ressources vers ledit gestionnaire 16, 16' de ressources d'architecture dédiée (étape 11).

Dans ladite architecture dédiée 15, 15', ledit gestionnaire 16, 16' de ressources d'architecture dédiée peut soit acquitter ladite demande de ressources par un message d'acquittement (OK), soit rejeter ladite demande par un message de rejet (NOK), soit modifier ladite demande de ressources.

Ledit gestionnaire 16, 16' de ressources d'architecture dédiée renvoie le résultat précédent audit administrateur 14 de ressources dudit terminal 10 (étape 12).

Lorsque le message transmis est un message de rejet (message NOK), la demande de ressources est rejetée et aucune acceptation de ressources n'est réalisée ni vers ledit allocataire 12 de ressources, ni vers ladite interface radio 11 dudit terminal 10.

Ledit administrateur 14 de ressources dudit terminal 10 commande la libération de toutes les ressources réservées vers ledit allocataire 12 de ressources et vers ladite interface radio 11 et l'abandon de la procédure d'accès réseau. L'étape suivante du procédé, conforme à l'invention, est l'étape 15 (voir ci-après).

Lorsque le message transmis est un message d'acquittement (message OK), ledit administrateur 14 de ressources transmet ladite demande de ressources vers ledit allocataire 12 de ressources pour acceptation de la réservation des ressources et attribution desdites ressources réservées pour ladite application 18, 19, 20. Ledit allocataire 12 de ressources répond par un message de rejet (NOK) ou par un message OK (étape 13).

De plus, ledit administrateur 14 de ressources transmet ladite demande de ressources vers ladite interface radio 11 pour confirmation de la procédure d'accès réseau. Ladite interface radio 11 répond par un message de rejet (NOK), par exemple en cas où le réseau mobile n'est pas accessible par le terminal 10, ou par un message OK (étape 14).

Ledit administrateur 14 de ressources transmet ladite demande de ressources vers ledit gestionnaire 16, 16' de ressources d'architecture dédiée (étape 15).

Lorsque le message transmis est un message d'acquittement (OK), ledit gestionnaire 16, 16' de ressources d'architecture dédiée associe lesdites ressources attribuées à ladite application 18, 19, 20 dans ladite architecture dédiée 15, 15'.

Si ladite demande a été rejetée, ledit gestionnaire 16, 16' de ressources d'architecture dédiée efface toutes les références correspondant à ladite demande de ressources.

Ledit gestionnaire 16, 16' de ressources d'architecture dédiée transmet le résultat précédent audit gestionnaire 17, 17' de processus de ladite architecture dédiée 15, 15' (étape 16).

Lorsque le message transmis est un message d'acquittement (OK), ledit gestionnaire 17, 17' de processus poursuit l'exécution de ladite application 18, 19, 20 dans ladite architecture dédiée 15, 15' (étape 17).

Si ladite demande a été rejetée, ledit gestionnaire 17, 17' de processus annule l'exécution de ladite application 18, 19, 20.

En fonction de la nature de ladite application 18, 19, 20, ainsi que de la complexité technologique dudit terminal 10, ou dans un souci de simplification ou d'économie par exemple du temps de traitement sur le terminal 10, une partie des étapes dudit procédé, conforme à l'invention, peut ne pas être réalisée.

Plus le nombre d'étapes est réduit, plus la probabilité d'une incompatibilité sera importante entre une demande de ressources et le traitement réalisé par le terminal pour affecter ladite ressource.

Dans le cas de la libération d'une application, les ressources affectées à ladite application 18, 19, 20 peuvent être libérées soit à la demande dudit gestionnaire 17, 17' de processus (étape 11) lorsque l'exécution de ladite application 18, 19, 20 est normalement terminée, soit lorsque lesdites ressources sont libérées de façon forcée (étape 12) par ledit allocataire 12 de ressources ou par ladite interface radio 11 ou par ledit administrateur 14 de ressources du terminal 10, par exemple en cas de défaut ou de coupure du terminal 10.

Dans ce cas, un message de rejet (message NOK) est transmis en précisant ladite application concernée. A la fin du traitement, lesdites ressources sont libérées et l'exécution de l'application 16, 19, 20 est terminée.

Ledit gestionnaire 13 d'architectures dédiées a la possibilité de commander l'ouverture d'une architecture dédiée 15, 15' pour l'affecter à un réseau de communication. A cet effet, ledit administrateur 14 de ressources dudit gestionnaire 13 d'architectures dédiées transmet un message d'acquittement (message OK) pour exécuter une demande prédéfinie de ressources, précisant les ressources minima permettant le fonctionnement de ladite architecture dédiée 15, 15'. Ce type de demande prédéfinie de ressources peut par exemple être prioritaire par rapport à d'autres demandes de ressources pour faciliter l'ouverture d'une nouvelle architecture dédiée 15, 15'.

Dans ce cas, le procédé conforme à l'invention débute par l'étape 3. A la fin du traitement, lesdites ressources sont allouées à ladite architecture dédiée 15, 15' et sont gérées par ledit gestionnaire 16, 16' de ressources d'architecture dédiée et ledit gestionnaire 17, 17' de processus.

Ledit gestionnaire 13 d'architectures dédiées a également la possibilité de commander la modification des ressources affectées à une architecture dédiée 15, 15'. A cet effet, ledit administrateur 14 de ressources dudit gestionnaire 13 d'architectures dédiées transmet un message d'acquittement (message OK) pour exécuter une demande de ressources précisant la modification des ressources de ladite architecture dédiée 15, 15'.

Dans ce cas, le procédé conforme à l'invention débute par l'étape 3. A la fin du traitement, lesdites ressources modifiées sont allouées à ladite architecture dédiée 15, 15'.

Ledit gestionnaire 13 d'architectures dédiées a également la possibilité de commander la libération d'une architecture dédiée 15, 15'. A cet effet, ledit administrateur 14 de ressources dudit gestionnaire 13 d'architectures dédiées transmet un message de rejet (message NOK) précisant ladite architecture dédiée 15, 15'.

Dans ce cas, le procédé conforme à l'invention débute par l'étape 12. A la fin du traitement, les ressources allouées à ladite architecture dédiée 15, 15' sont libérées et l'architecture dédiée 15, 15' n'est plus associée à un réseau de communication sur ledit terminal 10.

Ledit gestionnaire 13 d'architectures dédiées a également la possibilité de suspendre ou de restaurer le fonctionnement d'une architecture dédiée 15, 15', c'est-à-dire que l'accès de ladite architecture dédiée 15, 15' au réseau de communication correspondant est momentanément suspendu ou rétabli. A cet effet, ledit administrateur 14 de ressources dudit gestionnaire 13 d'architectures dédiées transmet la demande à ladite interface radio 11.

Ladite interface radio 11 dudit terminal 10 extrait de ladite demande les paramètres nécessaires à l'exécution de la procédure de suspension ou de restauration de l'accès audit réseau de communication concerné, procédures normalisées par l'ETSI (European Télécommunications Standards Institute, soit Institut européen de normalisation des télécommunications). Ladite interface radio 11 dudit terminal 10 reçoit dudit réseau de communication le résultat de la procédure, soit un rejet (message NOK) ou soit une acceptation (message OK).

Ladite interface radio 11 dudit terminal 10 transmet ledit résultat vers ledit administrateur 14 de ressources dudit gestionnaire 13 d'architectures dédiées. Le message NOK indique que la procédure de suspension ou de restauration à échouer. Le message OK permet l'exécution de ladite procédure de suspension ou de restauration.

## Revendications

1. Système de gestion d'au moins une ressource dans un terminal (10) multi-noms de point d'accès, pour une pluralité d'architectures chacune dédiée (15, 15') à un parmi plusieurs réseaux de communication et connectée audit réseau, **caractérisé en ce que** ledit système comprend :
• la pluralité d'architectures dédiées (15, 15'), chacune comportant un gestionnaire (17, 17') de processus de ladite architecture dédiée (15, 15') et un gestionnaire (16, 16') de ressources d'architecture dédiée,
• le gestionnaire de processus étant configuré pour définir une ressource du terminal correspondant à une application (18, 19, 20) activée sur ledit terminal (10), pour demander l'accès à ladite ressource au gestionnaire (16, 16') de ressources correspondant et pour exécuter ladite application (18, 19, 20) par l'intermédiaire de ladite ressource après validation,
• le gestionnaire (16, 16') de ressources d'architecture dédiée étant configuré pour dialoguer avec au moins un administrateur (14) de ressources d'au moins un gestionnaire (13) d'architectures dédiées, pour associer la ressource du terminal demandée avec ladite application (18, 19, 20) après validation, pour générer une réponse après contrôle de ladite demande d'accès aux ressources du terminal,
• l'administrateur étant configuré pour transmettre ladite demande de ressources à au moins un allocataire (12) de ressources dudit terminal (10) configuré pour allouer au moins une ressource, pour transmettre ladite demande de ressources à au moins une interface radio (11) configurée pour allouer la ressource commune demandée pour accéder à la pluralité de réseaux de communication, pour générer une réponse après contrôle de ladite demande d'accès en fonction de demandes d'accès aux ressources communes d'autres architectures dédiées (15, 15') de la pluralité d'architectures dédiées.

2. Système de gestion selon la revendication 1, **caractérisé en ce que** ledit gestionnaire (16, 16') de ressources d'architecture dédiée est intégré dans chaque architecture dédiée (15, 15') dudit terminal (10).

3. Système de gestion selon l'une des revendications 1 ou 2, **caractérisé en ce que** ledit gestionnaire (16, 16') de ressources d'architecture dédiée est équipé d'au moins une interface pour l'émission et la réception d'informations avec ledit administrateur (14) de ressources dudit gestionnaire (13) d'architectures dédiées.

4. Système de gestion selon l'une quelconque des revendications 1 à 3, **caractérisé en ce que** ledit gestionnaire (16, 16') de ressources d'architecture dédiée est équipé d'au moins une interface pour l'émission et la réception d'informations avec au moins un gestionnaire (17, 17') de processus de ladite architecture dédiée (15, 15').

5. Système de gestion selon l'une quelconque des revendications 1 à 4, **caractérisé en ce que** ledit administrateur (14) de ressources dudit gestionnaire (13) d'architectures dédiées est équipé d'au moins une interface pour l'émission et la réception d'informations avec au moins un allocataire (12) de ressources dudit terminal (10).

6. Système de gestion selon l'une quelconque des revendications 1 à 5, **caractérisé en ce que** ledit administrateur (14) de ressources dudit gestionnaire (13) d'architectures dédiées est équipé d'au moins une interface pour l'émission et la réception d'informations avec au moins une interface radio (11).

7. Système de gestion selon l'une quelconque des revendications 1 à 6, **caractérisé en ce que** ledit gestionnaire (16, 16') de ressources d'architecture dédiée est équipé d'au moins une table de correspondance de ressources pour définir au moins une ressource du terminal correspondant à au moins une application (18, 19, 20) activée sur ledit terminal (10).

8. Procédé de gestion d'au moins une ressource dans un terminal (10) multi-noms de point d'accès pour une pluralité d'architectures chacune dédiée (15, 15') à un parmi plusieurs réseaux de communication et connectée audit réseau, **caractérisé en ce que** ledit procédé comporte les opérations consistant à :
- activer au moins une application (18, 19, 20) sur ledit terminal (10) multi-noms de point d'accès,
- définir par un gestionnaire (17, 17') de processus de ladite architecture dédiée (15, 15'), associé avec ladite architecture dédiée, une ressource du terminal correspondant à ladite application (18, 19, 20),
- demander l'accès à ladite ressource par le gestionnaire (17, 17') de processus à un gestionnaire (16, 16') de ressources d'architecture dédiée correspondant, chacun étant associé à une architecture dédiée correspondante,
- générer une réponse après contrôle de ladite demande d'accès à ladite ressource du terminal par ledit gestionnaire (16, 16') de ressources d'architecture dédiée,
- générer une réponse après contrôle de ladite demande d'accès par au moins un administrateur (14) de ressources d'au moins un gestionnaire (13) d'architectures dédiées du terminal multi-noms de point d'accès, en fonction de demandes d'accès aux ressources du terminal d'autres architectures dédiées (15, 15') de la pluralité d'architectures dédiées,
- allouer au moins une ressource par au moins un allocataire (12) de ressources dudit terminal (10) multi-noms de point d'accès,
- allouer ladite ressource demandée par au moins une interface radio (11) pour accéder à la pluralité de réseaux de communication,
- associer ladite ressource demandée avec ladite application (18, 19, 20) après validation par ledit gestionnaire (16, 16') de ressources d'architecture dédiée,
- exécuter ladite application (18, 19, 20) par l'intermédiaire de ladite ressource par ledit gestionnaire (17, 17') de processus.

9. Terminal (10) multi-noms de point d'accès, **caractérisé en ce qu'**il comporte au moins des moyens adaptés pour la mise en oeuvre du système selon l'une quelconque des revendications 1 à 7 et du procédé selon la revendication 8.

## Patentansprüche

1. System zur Verwaltung mindestens einer Ressource in einem Multi-Zugangspunktnamen-Endgerät (10) für eine Vielzahl von Architekturen, die je (15, 15') einem von mehreren Kommunikationsnetzwerken dediziert und an das Netzwerk angeschlossen sind, **dadurch gekennzeichnet, dass** das System enthält:
• die Vielzahl dedizierter Architekturen (15, 15'), die je einen Prozess-Manager (17, 17') der dedizierten Architektur (15, 15') und einen Manager (16, 16') von Ressourcen dedizierter Architektur enthalten,
• wobei der Prozess-Manager konfiguriert ist, eine Ressource des Endgeräts zu definieren, die einer auf dem Endgerät (10) aktivierten Anwendung (18, 19, 20) entspricht, um vom entsprechenden Ressourcen-Manager (16, 16') den Zugang zur Ressource zu verlangen und um die Anwendung (18, 19, 20) nach Validierung mittels der Ressource auszuführen,
• wobei der Manager (16, 16') von Ressourcen dedizierter Architektur konfiguriert ist, mit mindestens einem Ressourcen-Administrator (14) mindestens eines Managers (13) dedizierter Architekturen zu dialogisieren, um nach Validierung die angeforderte Ressource des Endgeräts mit der Anwendung (18, 19, 20) zu verbinden, um nach Kontrolle der Zugangsanforderung zu den Ressourcen des Endgeräts eine Antwort zu generieren,
• wobei der Administrator konfiguriert ist, die Ressourcen-Anforderung an mindestens einen Ressourcen-Allokator (12) des Endgeräts (10) zu übertragen, der konfiguriert ist, mindestens eine Ressource zuzuweisen, um die Ressourcen-Anforderung an mindestens eine Funkschnittstelle (11) zu übertragen, die konfiguriert ist, die angeforderte gemeinsame Ressource für den Zugang zur Vielzahl von Kommunikationsnetzwerken zuzuweisen, um nach Kontrolle der Zugangsanforderung abhängig von Zugangsanforderungen zu den gemeinsamen Ressourcen anderer dedizierter Architekturen (15, 15') der Vielzahl von dedizierten Architekturen eine Antwort zu generieren.

2. Verwaltungssystem nach Anspruch 1, **dadurch gekennzeichnet, dass** der Manager (16, 16') von Ressourcen dedizierter Architektur in jede dedizierte Architektur (15, 15') des Endgeräts (10) eingebaut ist.

3. Verwaltungssystem nach einem der Ansprüche 1 oder 2, **dadurch gekennzeichnet, dass** der Manager (16, 16') von Ressourcen dedizierter Architektur mit mindestens einer Schnittstelle zum Senden und Empfangen von Informationen mit dem Ressourcen-Administrator (14) des Managers (13) dedizierter Architekturen ausgestattet ist.

4. Verwaltungssystem nach einem der Ansprüche 1 bis 3, **dadurch gekennzeichnet, dass** der Manager (16, 16') von Ressourcen dedizierter Architektur mit mindestens einer Schnittstellen zum Senden und Empfangen von Informationen mit mindestens einem Prozess-Manager (17, 17') der dedizierten Architektur (15, 15') ausgestattet ist.

5. Verwaltungssystem nach einem der Ansprüche 1 bis 4, **dadurch gekennzeichnet, dass** der Ressourcen-Administrator (14) des Managers (13) dedizierter Architekturen mit mindestens einer Schnittstelle zum Senden und Empfangen von Informationen mit mindestens einem Ressourcen-Allokator (12) des Endgeräts (10) ausgestattet ist.

6. Verwaltungssystem nach einem der Ansprüche 1 bis 5, **dadurch gekennzeichnet, dass** der Ressourcen-Administrator (14) des Managers (13) dedizierter Architekturen mit mindestens einer Schnittstelle zum Senden und Empfangen von Informationen mit mindestens einer Funkschnittstelle (11) ausgestattet ist.

7. Verwaltungssystem nach einem der Ansprüche 1 bis 6, **dadurch gekennzeichnet, dass** der Manager (16, 16') von Ressourcen dedizierter Architektur mit mindestens einer Entsprechungstabelle von Ressourcen ausgestattet ist, um mindestens eine Ressource des Endgeräts zu definieren, die mindestens einer auf dem Endgerät (10) aktivierten Anwendung (18, 19, 20) entspricht.

8. Verwaltungsverfahren mindestens einer Ressource in einem Multi-Zugangspunktnamen-Endgerät (10) für eine Vielzahl von Architekturen, die je (15, 15') einem von mehreren Kommunikationsnetzwerken dediziert und an das Netzwerk angeschlossen sind, **dadurch gekennzeichnet, dass** das Verfahren die Vorgänge aufweist, die darin bestehen:
- mindestens eine Anwendung (18, 19, 20) auf dem Multi- Zugangspunktnamen -Endgerät (10) zu aktivieren,
- durch einen Prozess-Manager (17, 17') der dedizierten Architektur (15, 15'), der mit der dedizierten Architektur verbunden ist, eine Ressource des Endgeräts zu definieren, die der Anwendung (18, 19, 20) entspricht,
- den Zugang zu der Ressource durch den Prozess-Manager (17, 17') von einem entsprechenden Manager (16, 16') von Ressourcen dedizierter Architektur anzufordern, die je einer entsprechenden dedizierten Architektur zugeordnet sind,
- nach Kontrolle der Zugangsanforderung zur Ressource des Endgeräts durch den Manager (16, 16') von Ressourcen dedizierter Architektur eine Antwort zu generieren,
- nach Kontrolle der Zugangsanforderung durch mindestens einen Ressourcen-Administrator (14) mindestens eines Managers (13) dedizierter Architekturen des Multi- Zugangspunktnamen - Endgeräts, abhängig von Zugangsanforderungen zu den Ressourcen des Endgeräts anderer dedizierter Architekturen (15, 15') der Vielzahl dedizierter Architekturen, eine Antwort zu generieren,
- mindestens eine Ressource durch mindestens einen Ressourcen-Allokator (12) des Multi-Zugangspunktnamen -Endgeräts (10) zuzuweisen,
- die angeforderte Ressource durch mindestens eine Funkschnittstelle (11) für den Zugang zur Vielzahl von Kommunikationsnetzwerken zuzuweisen,
- nach Validierung durch den Manager (16, 16') von Ressourcen dedizierter Architektur die angeforderte Ressource mit der Anwendung (18, 19, 20) zu verbinden,
- die Anwendung (18, 19, 20) mittels der Ressource durch den Prozess-Manager (17, 17') auszuführen.

9. Multi-Zugangspunktnamen-Endgerät (10), **dadurch gekennzeichnet, dass** es mindestens Einrichtungen aufweist, die zur Anwendung des Systems nach einem der Ansprüche 1 bis 7 und des Verfahrens nach Anspruch 8 geeignet sind.

## Claims

1. System for managing at least one resource in a multi-access-point-name terminal (10), for a plurality of architectures each dedicated (15, 15') to one out of several communication networks and connected to said network, **characterized in that** said system comprises:
• the plurality of dedicated architectures (15, 15'), each comprising a process manager (17, 17') of said dedicated architecture (15, 15') and a dedicated-architecture resources manager (16, 16'),
• the process manager being configured to define a resource of the terminal corresponding to an application (18, 19, 20) activated on said terminal (10), to request the corresponding resources manager (16, 16') for access to said resource and to execute said application (18, 19, 20) by way of said resource after validation,
• the dedicated-architecture resources manager (16, 16') being configured to dialogue with at least one administrator (14) of resources of at least one manager (13) of dedicated architectures, to associate the requested resource of the terminal with said application (18, 19, 20) after validation, to generate a response after checking of said request for access to the resources of the terminal,
• the administrator being configured to transmit said request for resources to at least one allocator (12) of resources of said terminal (10) configured to allocate at least one resource, to transmit said request for resources to at least one radio interface (11) configured to allocate the common resource requested to access the plurality of communication networks, to generate a response after checking of said access request as a function of requests for access to the common resources of other dedicated architectures (15, 15') of the plurality of dedicated architectures.

2. System for managing according to Claim 1, **characterized in that** said dedicated-architecture resources manager (16, 16') is integrated into each dedicated architecture (15, 15') of said terminal (10).

3. System for managing according to one of Claims 1 or 2, **characterized in that** said dedicated-architecture resources manager (16, 16') is equipped with at least one interface for sending and receiving information with said administrator (14) of resources of said manager (13) of dedicated architectures.

4. System for managing according to any one of Claims 1 to 3, **characterized in that** said dedicated-architecture resources manager (16, 16') is equipped with at least one interface for sending and receiving information with at least one process manager (17, 17') of said dedicated architecture (15, 15').

5. System for managing according to any one of Claims 1 to 4, **characterized in that** said administrator (14) of resources of said manager (13) of dedicated architectures is equipped with at least one interface for sending and receiving information with at least one allocator (12) of resources of said terminal (10).

6. System for managing according to any one of Claims 1 to 5, **characterized in that** said administrator (14) of resources of said manager (13) of dedicated architectures is equipped with at least one interface for sending and receiving information with at least one radio interface (11).

7. System for managing according to any one of Claims 1 to 6, **characterized in that** said dedicated-architecture resources manager (16, 16') is equipped with at least one table of correspondence of resources to define at least one resource of the terminal corresponding to at least one application (18, 19, 20) activated on said terminal (10).

8. Method for managing at least one resource in a multi-access-point-name terminal (10) for a plurality of architectures each dedicated (15, 15') to one out of several communication networks and connected to said network, **characterized in that** said method comprises the operations consisting in:
- activating at least one application (18, 19, 20) on said multi- access-point-name terminal (10),
- defining via a process manager (17, 17') of said dedicated architecture (15, 15') and associated with said dedicated architecture, a resource of the terminal corresponding to said application (18, 19, 20),
- requesting a corresponding dedicated-architecture resources manager (16, 16') for access to said resource by the process manager (17, 17'), each being associated with a corresponding dedicated architecture,
- generating a response after checking of said request for access to said resource of the terminal by said dedicated-architecture resources manager (16, 16'),
- generating a response after checking of said request for access by at least one administrator (14) of resources of at least one manager (13) of dedicated architectures of the multi- access-point-name terminal, as a function of requests for access to the resources of the terminal of other dedicated architectures (15, 15') of the plurality of dedicated architectures,
- allocating at least one resource via at least one allocator (12) of resources of said multi- access-point-name terminal (10),
- allocating said resource requested by at least one radio interface (11) to access the plurality of communication networks,
- associating said resource requested with said application (18, 19, 20) after validation by said dedicated-architecture resources manager (16, 16'),
- executing said application (18, 19, 20) by way of said resource via said process manager (17, 17').

9. Multi-access-point-name terminal (10), **characterized in that** it comprises at least means adapted for the implementation of the system according to any one of Claims 1 to 7 and of the method according to Claim 8.
